Europäisches Patentamt

European Patent Office

Office européen des brevets

(11) Publication number: **0 552 827 A1**

# EUROPEAN PATENT APPLICATION

(21) Application number: 93200024.3

(22) Date of filing: 07.01.93

(51) Int. Cl.5: **B60C 23/00**

(30) Priority: **21.01.92 US 823095**

(43) Date of publication of application:
**28.07.93 Bulletin 93/30**

(84) Designated Contracting States:
**DE FR GB**

(71) Applicant: **GENERAL MOTORS CORPORATION**
**General Motors Building 3044 West Grand**
**Boulevard**
**Detroit Michigan 48202(US)**

(72) Inventor: **Hurrell II, George Leonard**
**103 West Rose Lane**
**Port Clinton, OH 43452(US)**
Inventor: **Sandy, William Michael, Jr.**
**7727 Edgewood Lane**
**Seven Hills, OH 44131(US)**
Inventor: **Williams, Donald Lloyd**
**2252 N. Carriage Land**
**Port Clinton, OH 43452(US)**

(74) Representative: **Jehan, Robert et al**
**Patent Section, 1st Floor, Gideon House, 28**
**Chapel Street**
**Luton, Bedfordshire LU1 2SE (GB)**

(54) Tyre pressure sensing system.

(57) The relative speeds $(\Omega_{LF}, \Omega_{RF}, \Omega_{LR}, \Omega_{PR})$ of the tyres of a vehicle are monitored as an indication of the operating state of the vehicle. If the vehicle is not operating in one of a number of predetermined states, the relative tyre speeds are monitored as an indication of relative pressure of the vehicle tyres. Differences in relative speeds not related to the predetermined states and not related to differences in relative pressures are accounted for.

FIG. 1

The present invention relates to a method and apparatus for determining pressure loss in the tyres of a vehicle.

Prior attempts have been made to determine the tyre pressure of vehicle tyres, for example using inflation pressure sensors on each of the vehicle tyres as described in US-A-3,938,076, or by attempting to measure the spring rate of the tyre as described in US-A-4,574,267. Any accurate tyre pressure information that might be available with these systems is only achieved at substantial added cost and complexity.

Sophisticated automotive vehicle control systems are available which use wheel speed sensors on each of the wheels of the vehicle, for instance to provide information to anti-lock brake controllers or to traction controllers. Beyond the primary technologies that resulted in the use of individual wheel speed sensors on each of the vehicle wheels, there is at least one secondary use of individual wheel speed data, which is to provide an indication of the rolling radius of each tyre, which may be used to determine the pressure of the air in each of the tyres.

Systems are available which attempt to determine tyre pressure by monitoring wheel speed. Such systems generally make simple comparisons of the speed of the vehicle wheels relative to each other or relative to a predetermined reference value. These systems are susceptible to false alarms caused by a variety of external factors affecting the speed of the individual wheels and not detectable by such simple comparisons. Examples of such external factors are vehicle acceleration and deceleration, vehicle cornering, uneven vehicle loading for example from cargo, yaw moments caused by cross-winds, and travelling on uneven road surfaces such as hills.

Moreover, individual vehicles have peculiarities that cannot be accounted for in simple wheel speed monitoring systems, and can cause false alarms. For example, the type of tyres and their wear pattern bears on the speed of the vehicle wheels, and may vary from tyre to tyre.

Such "external factors", unless properly accounted for, can erode the accuracy of the pressure monitoring system, and can cause false indications of low tyre pressure. Further, idiosyncracies in the vehicle itself may bias the individual wheel speed values, increasing the potential for false indications of pressure loss. Such biases are typically difficult to account for, for instance by a predetermined model of vehicle behaviour, as the biases are often vehicle specific, and can change in unpredictable ways throughout the life of the vehicle.

The present invention seeks to provide an improved method and apparatus for determining pressure loss in the tyres of a vehicle.

According to an aspect of the present invention, there is provided a tyre pressure sensing system as specified in claim 1.

According to another aspect of the present invention, there is provided a method of determining pressure loss in the tyres of a vehicle as specified in claim 4.

The present invention can compensate for external factors by detecting when the factors are at work, and by dismissing data skewed thereby as not being indicative of loss of tyre pressure. The invention can develop an adaptive model of the behaviour of the wheel speed information in the absence of external factors and in the absence of detected leaks in the tyres. The model can be continuously updated so as to make available an updated account of the vehicle bias not due to external factors or tyre leaks.

Thus, it is possible to filter out wheel speed variations caused by the above-described external factors so as to provide wheel speed information indicative of tyre rolling radius and thus of tyre pressure. The system may also be capable of learning the idiosyncrasies of the vehicles it is applied to, on a vehicle by vehicle basis, so as to provide more reliable information.

A practical embodiment can substantially reduce susceptibility to false alarms by determining whether a variation in wheel speed is due to some external factor or is due to a loss in pressure in one or more tyres. This embodiment preferably maintains a long-term running account of wheel speed behaviour in the absence of sensed external factors such as those described above, and factors that affect the behaviour of wheel speed information in such a manner that variations in the information attributed to a vehicle's peculiarities can be virtually eliminated as a source of false alarms.

The above embodiment preferably develops predetermined models of the relationship between individual wheel speed values for a variety of operating scenarios. The scenarios may be those that would cause notable wheel speed variations not attributable to loss of tyre pressure, such as the above-described external factors. The models thus developed may be compared to the sensed speed of the individual wheels and, from this comparison, if it is determined that the vehicle is operating in such a manner that the present wheel speed data is not useful for the determination of tyre pressure, the data may be discarded, and further analysis terminated.

Wheel speed data may be compared to predetermined models of what the data should resemble if there is at least a threshold loss of pressure in a vehicle tyre. If such a comparison indicates a sufficient loss of tyre pressure, an indication thereof may be provided to the vehicle driver for appropriate action.

An embodiment of the present invention is described below, by way of illustration only, with reference to the accompanying drawings, in which:

Figure 1 is a block diagram of an embodiment of pressure determining apparatus;

Figure 2 is a flow chart of a computer initialisation routine;

Figures 3a and 3b show a flow chart of an embodiment of method of determining tyre pressure;

Figures 4a to 4h are examples of wheel delta speed patterns for some vehicle manoeuvres; and

Figures 5a to 5h show wheel delta speed patterns for tyre leaks.

The inflation pressure of conventional automotive tyres is related to the tyre radius in that, to an extent, increasing the tyre pressure increases the radius. Further, tyre radius is related to tyre rotational speed in that, for a given vehicle speed, the tyre rotational speed will increase as the tyre radius decreases. Accordingly, by relating the tyre (wheel) speed of the vehicle tyres to each other, all of which are subject to a common vehicle speed, information on the tyre radius and thus on the individual tyre inflation pressure is made available.

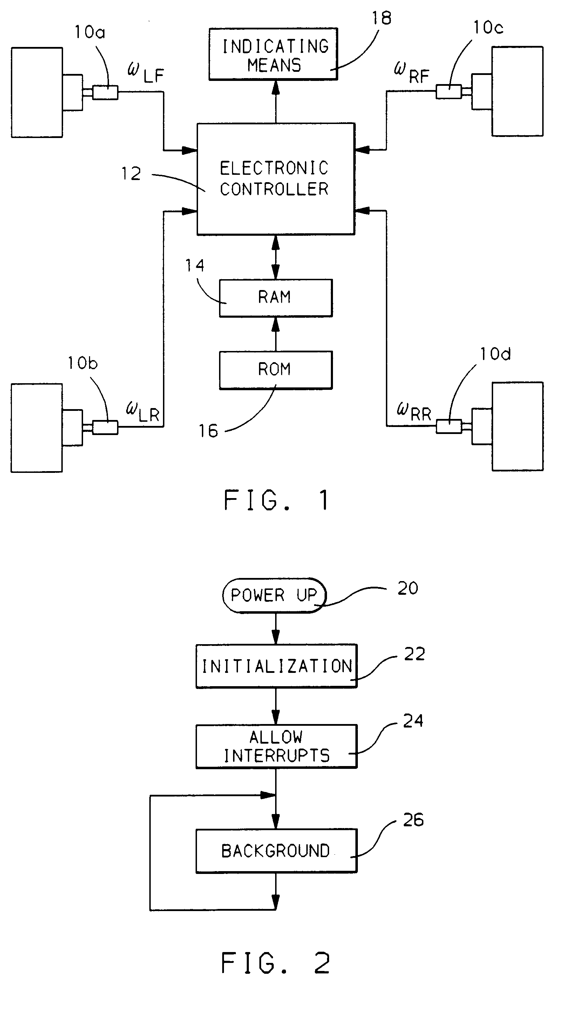

An embodiment of apparatus used to sense and process the wheel speeds of the four wheels is shown in Figure 1. Conventional wheel speed sensors 10a, 10b, 10c, and 10d are located at the wheels of a vehicle and provide the speed of the left front wheel $w_{LF}$, the right front wheel $w_{RF}$, the left rear wheel $w_{LR}$, and the right rear wheel $w_{RR}$ to an electronic controller 12, such as a Motorola MC68HC11 single chip microprocessor. The wheel speed information is stored in random access memory 14. At pre-specified times during the operation of the controller 12, information is transferred from read only memory 16 to random access memory 14 so as to be more accessible to the controller 12.

The wheel speed information is used to determine first whether the vehicle is operating in a manner in which it can be assumed that reliable tyre pressure information is available from the wheel speed data. If reliable information is available, the wheel speed data is used to determine whether there has been a recent pressure loss in one of the vehicle tyres and the driver is notified via an indicator 18 if such a pressure loss is found.

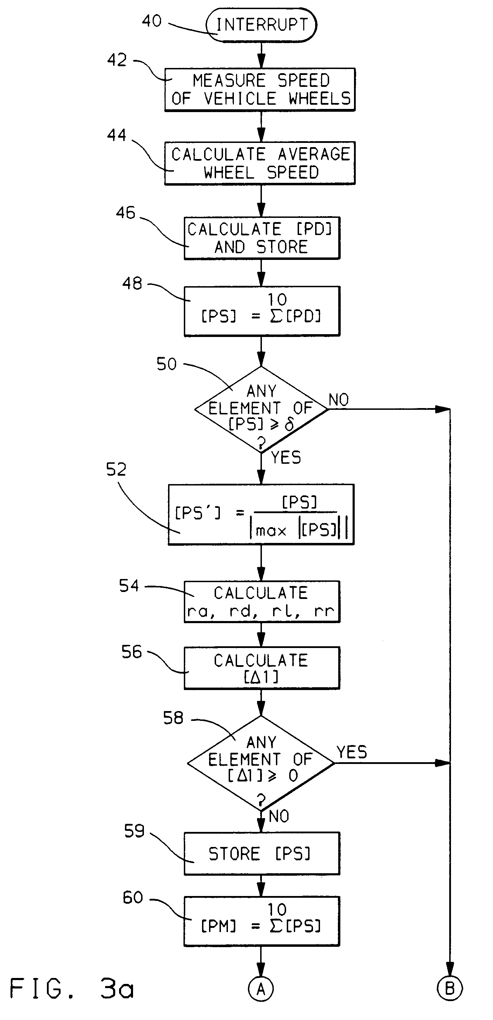

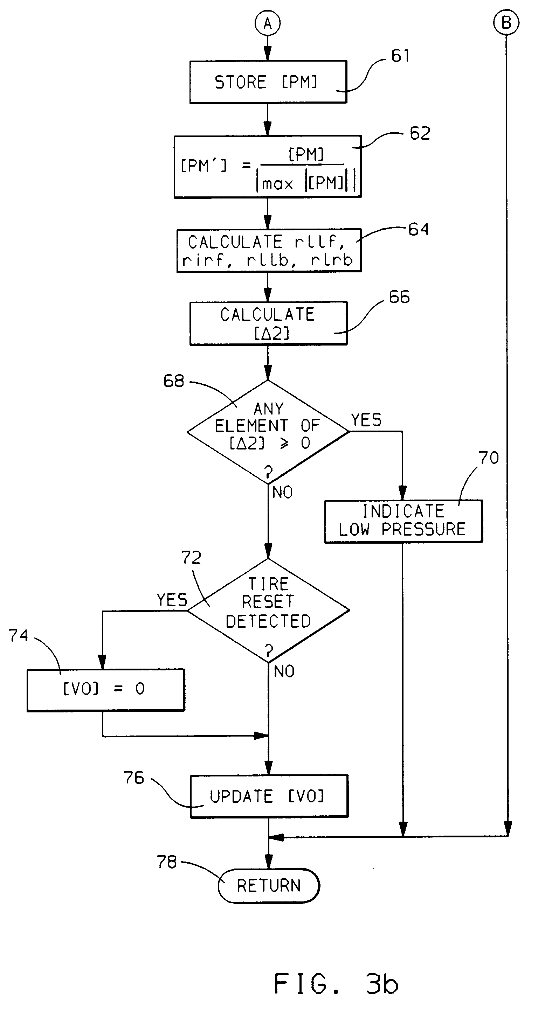

An embodiment of routines used to process the wheel speed information so as to make the above-described determinations are illustrated in FIGS. 2, 3a, and 3b. When power is first applied to the system, such as when the vehicle ignition is switched on, the routine of Figure 2 is initiated at point 20 and proceeds to step 22 to provide for general system initialization. For example, at this step initial values stored in the read only memory (ROM) 16 are entered into ROM-designated random access memory 14 locations and counters flags and pointers are initialized.

After initialization, the routine proceeds to step 24 where interrupts are enabled, such as by resetting an interrupt mask bit in a condition code register. Next, the routine proceeds to a background loop at step 26, which is repeated continuously. This loop may include, for example, diagnostic and maintenance routines. In this embodiment, the background routine is interrupted every 100 milliseconds to execute the routine of Figures 3a and 3b.

The routine illustrated in Figures 3a and 3b is entered, upon the occurrence of a 100 millisecond interrupt, at step 40 and proceeds immediately to step 42 to measure the angular speed of the vehicle wheels, using the four sensors illustrated in Figure 1. The routine then proceeds to step 44 to calculate the vehicle speed as an average of the four wheel speed values, as measured by the sensing configuration of Figure 1, on the basis of the following equation:

$$w_{avg} = (w_{LF} + w_{RF} + w_{LR} + w_{RR})/4.$$

The routine then proceeds to step 46 to calculate a value [PD], a matrix of adjusted delta speed patterns, on the basis of the following equation:

$$[PD] = \begin{bmatrix} \Delta F \\ \Delta B \\ \Delta L \\ \Delta R \\ \Delta D \\ \Delta X \end{bmatrix} - \left( w_{avg} * [VO] \right)$$

where

$$\begin{bmatrix} \Delta F \\ \Delta B \\ \Delta L \\ \Delta R \\ \Delta D \\ \Delta X \end{bmatrix} = \begin{bmatrix} w_{LF} - w_{RF} \\ w_{LR} - w_{RR} \\ w_{LF} - w_{LR} \\ w_{RF} - w_{RR} \\ w_{LF} - w_{RR} \\ w_{RF} - w_{LR} \end{bmatrix}$$

and [VO] is a vehicle offset matrix representing a long term measure of the vehicle wheel speed response in the absence of external factors and in the absence of detected tyre pressure leaks. The [VO] matrix is described in more detail below. The calculated matrix [PD] is stored in controller memory for use later in the routine.

The routine then proceeds to step 48 to determine a value [PS], a matrix representing the summation of calculated [PD] matrices over a predetermined period of time. In this embodiment, the [PD] matrix is calculated at the occurrence of every 100 millisecond interrupt and, in this embodiment, is the sum of the most recent ten [PD] matrices to represent a sampling of wheel speed activity over the last one second of operation.

After determining the [PS] matrix, the routine moves to step 50 to compare each of the constituent elements of the [PS] matrix to a predetermined deadband value $\delta$. This comparison is a means by which it may be efficiently determined at an early point in the execution of the routine whether the entries in the [PS] matrix indicate that the vehicle is not experiencing any excursions from what is assumed to be manoeuvre-free and leak-free operation. In other words, the inventors have found that early on in such an analysis of wheel speed information, a relatively simple check can be made on the delta wheel speed information, by which the routine may ascertain whether conditions are such that a later detection of a loss of pressure in one of the vehicle tyres may arise.

Accordingly, if all of the elements of the [PS] matrix are less than the deadband value $\delta$, the routine of Figures 3a and 3b returns, via step 78, to the background routine of Figure 2, as the difference in wheel speeds is so small that it is assumed that there are no substantial losses of tyre pressure. However, if at step 50 any element of the [PS] matrix exceeds the deadband value $\delta$, the routine proceeds to determine whether the deviation is the result of a vehicle manoeuvre or is the result of a loss of pressure in one of the vehicle tyres.

To carry out this further analysis, the routine proceeds to step 52 to normalize the [PS] matrix. The normalization process merely conditions the elements of [PS] to provide a basis of comparison to likewise normalized predetermined comparison values. The process used in this embodiment is one recognized as a standard mathematical normalization and, specifically, divides each of the elements of the [PS] matrix by the absolute value of the element thereof with the largest magnitude. The normalized matrix, designated [PS]', has six elements, $PS_1'$ to $PS_6'$, all of which necessarily have a magnitude less than or equal to one.

This normalization process merely provides a basis of comparison between the elements of the [PS] matrix and likewise normalized values. Any other means for providing a basis of comparison may be equally suited for the purposes of this routine.

The routine then proceeds to step 54 to calculate four characterization values. These values are derived from the elements of the normalized wheel speed pattern matrix [PS'] and characterize the vehicle behavior as described by the most recent one second of wheel speed data. The information is characterized so as to indicate whether the vehicle is in an operating state which normally has such a deleterious effect on the content of the wheel speed data that it is unlikely that any useful information about the pressure of the vehicle tyres will be available from this wheel speed data. Once the characterization values are calculated, if it is determined that the vehicle is operating in such a state, the routine will simply discard the most recent wheel speed information as being substantially valueless for the purposes of this routine and will return directly to the background routine of Figure 2. However, if the vehicle is operating in such a state that valuable information on tyre pressure may be derived from the wheel speed data, the routine proceeds to a derivation process, described in steps 59 to 76 of the routine of Figures 3a and 3b.

For the derivation process, the routine at step 54 calculates characterization values for vehicle manoeuvres, such as an acceleration value ra, a deceleration value rd, a left turn value rl, and a right turn value rr, on the basis of the following equations:

$$ra = 1/((PS'_1-PA_1)^2 + (PS'_2-PA_2)^2 + ... + (PS'_6-PA_6)^2)$$
$$rd = 1/((PS'_1-PD_1)^2 + (PS'_2-PD_2)^2 + ... + (PS'_6-PD_6)^2)$$
$$rl = 1/((PS'_1-PL_1)^2 + (PS'_2-PL_2)^2 + ... + (PS'_6-PL_6)^2)$$
$$rr = 1/((PS'_1-PR_1)^2 + (PS'_2-PR_2)^2 + ... + (PS'_6-PR_6)^2)$$

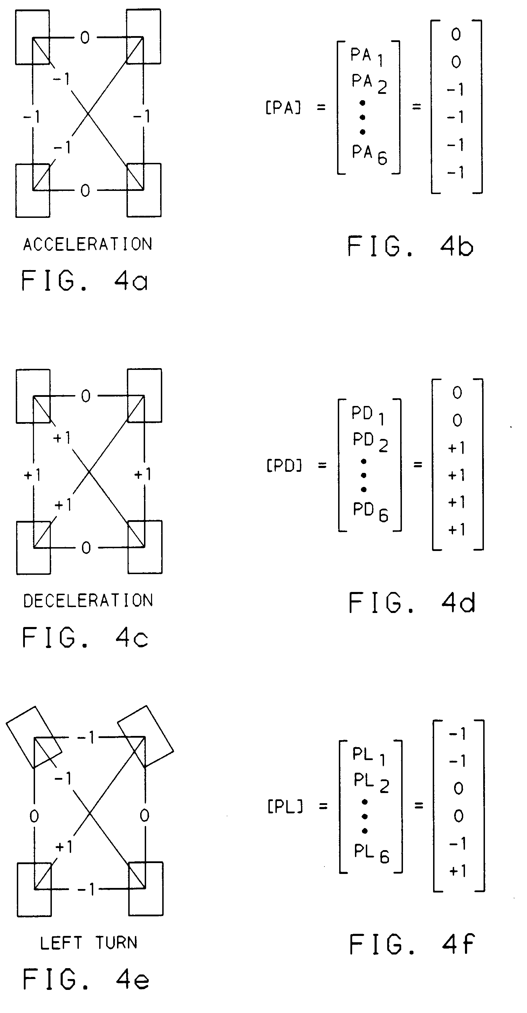

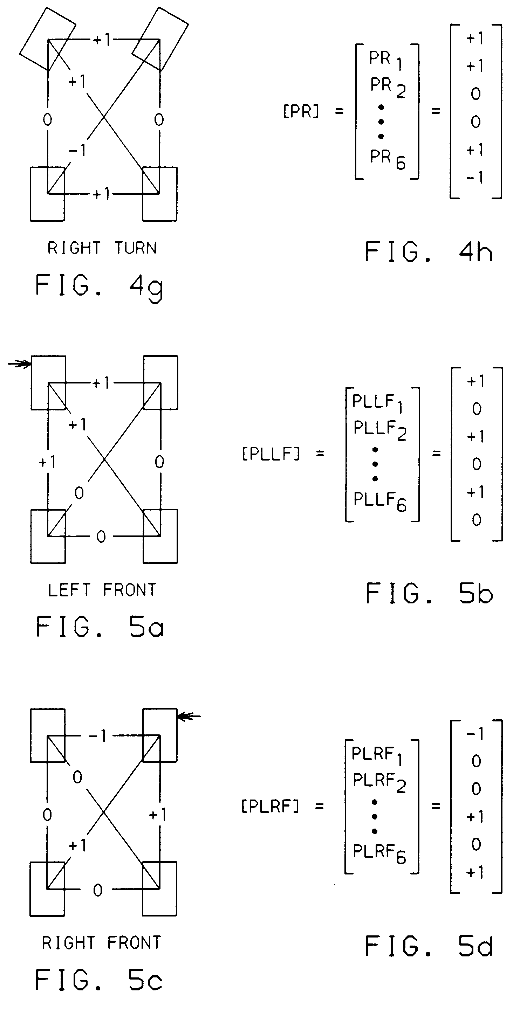

where the six elements of each of the [PA], [PD], [PL], and [PR] matrices are as shown in FIGS. 4b, 4d, 4f, and 4h, respectively. These matrices consist of predetermined normalized values, taking on one of the three values -1, 0, or 1, indicative of the relationship between the magnitudes of the speeds of the respective wheels, as shown in the diagrams of Figures 4a, 4c, 4e, and 4g, while the vehicle is operating in one of a predetermined variety of operating conditions, such as acceleration, deceleration, or turning, with substantially equal tyre pressures.

For instance, a value of 0 indicates the speed of the two wheels will normally be substantially the same in the indicated operating condition. A value of -1 indicates that the second wheel has a greater speed than the first, and a value of +1 indicates that the first wheel has a greater speed than the second in the indicated operating condition. The order of the wheels for these diagrams is the same as that used in the description of the calculation of the values of the matrix [PD] at step 46 of the routine of Figure 3a. For example, referring to Figures 4a and 4b, the matrix [PA], representing normal wheel speed relationships during vehicle acceleration, shows that the two front wheels should be approximately at the same speed, the two rear wheels should be approximately at the same speed, and each of the front wheel speeds should be less than each of the rear wheel speeds.

Similarly, the matrices [PD], [PL], and [PR] characterize the wheel speed relationships during deceleration, left turn, and right turn, respectively.

Other characterizations may be determined at step 54, beyond the four mentioned above, that likewise may have a deleterious effect on the value of the wheel speed information, such as the presence of wind with a substantial cross-wind component, severe uphill or downhill travel, or operation during wheel slip.

After determining the characterization values at step 54, the routine proceeds to step 56 to determine a [$\Delta 1$] matrix on the basis of the following equation:

$$[\Delta 1] = \begin{bmatrix} ra \\ rd \\ rl \\ rr \end{bmatrix} - \begin{bmatrix} tra \\ trd \\ trl \\ trr \end{bmatrix}$$

where tra, trd, trl, and trr are threshold recognition values for the manoeuvres of acceleration, deceleration, left turn, and right turn, respectively.

These recognition threshold values represent the approximate minimum magnitude of the recognition values ra, rd, rl, and rr that correspond to a manoeuvre so substantial that the wheel speed information available during the manoeuvre is, in the context of tyre pressure detection, substantially valueless. As mentioned above, other recognition values and recognition threshold values which also have a negative effect on the value of the wheel speed information vis-a-vis tyre pressure detection could also be included in this step.

If any recognition value exceeds or is equal to its corresponding recognition threshold value, wheel speed data determined and conditioned in steps 42 to 54 is assumed to be so unreliable that information on the present tyre pressure either is not available from that data, or is too difficult to reproduce therefrom for the purposes of this routine. Accordingly, in this routine, the data is discarded.

Specifically, the routine at step 56, determines the elements of the [$\Delta 1$] matrix by subtracting the recognition threshold values from their corresponding recognition values. At step 58, if any of the elements of the [$\Delta 1$] matrix are greater than or equal to zero, indicating that the wheel speed information may be affected by a recent vehicle operating condition, the routine proceeds to step 78 to return to the background routine of Figure 2 without saving the calculated [PS] matrix.

However, if all of the elements of the [$\Delta 1$] matrix are less than zero, the vehicle is assumed to be operating in a sufficiently stable manner that valuable tyre pressure information may still be available from the wheel speed data. Accordingly, the routine proceeds to steps 59 to 76 to determine whether there is a substantial loss of pressure in any of the vehicle tyres.

At step 59, the routine stores the elements of the [PS] matrix in random access memory 14 for future use. Next, the routine advances to step 60 to determine the values of a matrix [PM], which represents a sampling of delta wheel speed behaviour over a predetermined period of time. For example, in this embodiment, the [PM] matrix is a sum of the ten most recent [PS] matrices and, as such, represents a sampling of the delta wheel speed information over the most recent 10 seconds of operation.

The routine next moves to step 61 to store the elements of the [PM] matrix in random access memory 14 for subsequent use. The routine proceeds next to step 62 to normalize the elements of the [PM] matrix, by dividing each [PM] element by the absolute value of the [PM] element with the largest magnitude, in a similar manner as described above at step 52 of the routine of Figure 3a. The matrix of six normalized values, $PM_1'$ through $PM_6'$, is then stored as [PM']. The normalizing step 62 merely conditions the elements of the [PM] matrix to put them in a form more useful for the mathematical purposes of the routine of Figures 3a and 3b. However, any other method of preparing the delta wheel speed information for the mathematical manipulation described below would be satisfactory.

Next, the routine advances to step 64 to calculate values rllf, rlrf, rllb, and rlrb, which are indicative of the degree of pressure degradation in each of the four tyres of the vehicle. These four values are generally based on the aggregate deviation of the delta wheel speeds from a predetermined set of wheel speeds indicative of leaks in each of the four tyres of the vehicle. They are determined on the basis of the following equations:

$rllf = 1/((PM_1'-PLLF_1)^2 + (PM_2'-PLLF_2)^2 + \ldots \ldots + (PM_6'-PLLF_6)^2)$

$rlrf = 1/((PM_1'-PLRF_1)^2 + (PM_2'-PLRF_2)^2 + \ldots \ldots + (PM_6'-PLRF_6)^2)$

$rllb = 1/((PM_1'-PLLB_1)^2 + (PM_2'-PLLB_2)^2 + \ldots \ldots + (PM_6'-PLLB_6)^2)$

$rlrb = 1/((PM_1'-PLRB_1)^2 + (PM_2'-PLRB_2)^2 + \ldots \ldots + (PM_6'-PLRB_6)^2)$

$$[\Delta 2] \quad = \quad \begin{bmatrix} rllf \\ rlrf \\ rllb \\ rlrb \end{bmatrix} \quad - \quad \begin{bmatrix} trllf \\ trlrf \\ trllb \\ trlrb \end{bmatrix}$$

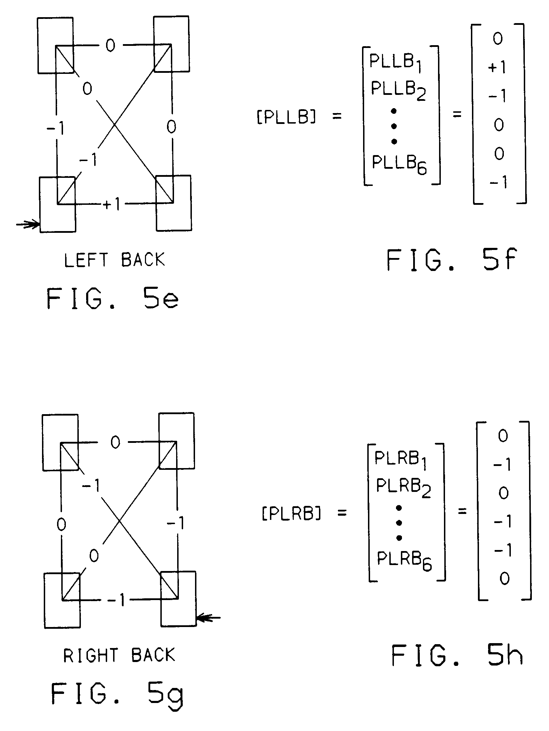

where the values from the [PLLF], [PLRF], [PLLB], and [PLRB] matrices, having six elements each, represent normalized characterizations of each of the six delta wheel speed relationships experienced when there is a tyre puncture or other leak. As shown in Figures 5b, 5d, 5f, and 5h, the elements of these matrices take on one of the three values -1, 0, or 1. These values are indicative of the magnitude relationship between the speed of the respective wheels, as shown in Figures 5a, 5c, 5e, and 5g, while each individual tyre is at a low pressure.

For example, a value of 0 indicates the speed of the two wheels is substantially the same. A value of -1 indicates that the second wheel has a greater speed than the first, and a value of +1 indicates that the first wheel has a greater speed than the second. The order of the wheels for these diagrams is the same as that used in the description of the calculation of the values of the matrix [PD] at step 46. For example, referring to Figures 5a and 5b, the matrix [PLLF] representing normal wheel speed relationships while the left front tyre is low in pressure, shows that the left front wheel should be rotating at a higher speed than the other three wheels, and that the other three should be rotating at approximately the same speed.

Similarly, the [PLRF], [PLLB], and [PLRB] matrices characterize the wheel speed relationships with low pressure in the right front, left rear, and right rear tyres, respectively. The six values in each of these matrices are normalized to illustrate the trend in comparative wheel speeds under the aforementioned leaks and are shown specifically in Figures 5b, 5d, 5f, and 5h.

The four calculated values are sums of delta speed deviations for all of the delta speed values between the present vehicle operating condition and the operating condition expected for a leak in the front left tyre, the front right tyre, the left rear tyre and the right rear tyre, as discussed. After calculating these four values, the routine moves to step 66 to calculate a [Δ2] matrix on the basis of the following equation:

where trllf, trlrf, trllb, and trlrb are threshold recognition values for leaks in each of the vehicle tyres, specifically a left front tyre leak, right front tyre leak, left rear tyre leak, and right rear tyre leak, respectively.

These recognition threshold values represent the approximate minimum magnitude of the recognition values rllf, rlrf, rllb, and rlrb that correspond to a minimum leak, which is a leak determined to be of a degree which can be detected and should be dealt with. If any recognition value exceeds or is equal to its corresponding recognition threshold value, a leak of at least minimum size is determined to be present and the driver is notified thereof.

At step 66, the routine calculates the elements of the matrix [Δ2] by subtracting the recognition threshold values from their corresponding recognition values as shown above. Next, at step 68, if any of the elements of the [Δ2] matrix is greater than or equal to zero, indicating the presence of at least one leak, the routine proceeds to step 70 to indicate the occurrence of a leak to the vehicle driver via an indicator 18, such as by illuminating a descriptive warning light on the instrument panel of the vehicle or by sounding an aural alert in the vehicle cabin.

The leak indicator 18 may include means for distinguishing critical information about the leak itself and for apprising the driver of that information. For example, included in this information could be the location of the leak, which may be determined from the specific element of the [Δ2] matrix that is greater than or equal to zero or the magnitude of the leak, which may be determined from the degree of deviation from zero at step 68, or the time history of the magnitude of the leak. After warning the driver of the detected leak, the routine proceeds to step 78 to return to the background routine illustrated in Figure 2.

If all of the elements of the [Δ2] matrix are less than zero, it is determined that there are no significant leaks in the vehicle tyres and the routine proceeds to step 72 to determine if a tyre reset has occurred since the last execution of step 72. A tyre reset occurs either manually or automatically when the tyres or wheels of the vehicle are changed.

A tyre change will generally affect the elements of the vehicle offset matrix [VO] to such an extent that prior vehicle offset information will be substantially obsolete. As such, upon a tyre or wheel change, old information contributing to the calculation of the elements of the [VO] matrix will be discarded, and only information accrued since the change will by factored into the determination of the [VO] matrix. As stated, the reset may be made manually, such as by switch actuation by the driver or by the tyre or wheel change technician, or may be made automatically, such as by a switch actuated when the vehicle tyres or wheels are changed.

If is is determined at step 72 that a reset has occurred, the routine proceeds to step 74 to clear the elements of the [VO] matrix. Next, or if there has not been a reset, the routine proceeds to step 76, to update the vehicle offset matrix [VO] on the basis of the following equation:

$$[VO] = \begin{bmatrix} \Sigma(\Delta F/w_{avg}) \\ \Sigma(\Delta B/w_{avg}) \\ \Sigma(\Delta L/w_{avg}) \\ \Sigma(\Delta R/w_{avg}) \\ \Sigma(\Delta D/w_{avg}) \\ \Sigma(\Delta X/w_{avg}) \end{bmatrix}$$

where $\Delta F$, $\Delta B$, $\Delta L$, $\Delta R$, $\Delta D$, and $\Delta X$ are the six delta wheel speed values calculated at step 46 of Figure 3a, and $w_{avg}$ is the present vehicle speed, calculated above at step 44 of Figure 3a. [VO] is a matrix that aggregates delta wheel speed values while the vehicle is operating in such a state that the four wheels of the vehicle should ideally be operating at the same speed, such that the delta speed values should be substantially zero. Any non-zero delta speed values indicates some bias in the readings not attributed to external factors such as vehicle manoeuvres and not attributed to tyre leaks.

Such values are aggregated and scaled by the present vehicle speed at step 76, the scaling being required due to the dependance of the magnitude of the delta wheel speed values on overall vehicle speed. The resultant values are subtracted from delta wheel speed data at step 46, before that data is used. The six constituent elements of the [VO] matrix are scaled sums including all delta speed values determined and stored from the last tyre reset, subject to three constraints.

First, as will be evident from the flow chart of Figures 3a and 3b, the summed and scaled values do not include delta wheel speed information taken when the vehicle is subject to some external factor or is in some manoeuvre such as acceleration or cornering. Secondly, the summed scaled values do not include delta wheel speed information when a leak has been detected at step 68. Thirdly, the summed scaled values, in this embodiment, only include a predetermined amount of past stored delta wheel speed data, as it is assumed that data eventually becomes unreliable as it is only indicative of the "steady-state" vehicle behaviour for a predetermined period of time after having been calculated. In this embodiment, data for at most approximately the last 20 hours of operation is used in the calculation of the [VO] matrix.

Subject to the above-described three constraints, the vehicle offset is determined at step 76, after which the routine returns to the background routine of Figure 2, via step 78. The use of the [VO] matrix in the determination of both vehicle manoeuvres and tyre leaks provides a means of adapting the leak sensing means to virtually all unmodelled disturbances in the sensed delta wheel speed values, thereby providing a leak detector less prone to false alarms. Moreover, the overall flexibility of the control provides for expansion of the coverage to such sources of false alarms as cross-winds and travel on steep slopes.

The disclosures in United States patent application No.823,095, from which this application claims priority, and in the abstract accompanying this application are incorporated herein by reference.

## Claims

1. A tyre pressure sensing system for determining pressure loss in the tyres of a vehicle, each tyre having in use a speed related to vehicle speed and to vehicle operating conditions; the system comprising storage means (14,16) for storing a plurality of tyre speed patterns representative of tyre speeds occurring as a result of normal vehicle operation; speed sensing means (10a-10b) for obtaining a measure of the speed of each vehicle tyre; determining means (12) for obtaining an actual tyre speed pattern from the sensed tyre speed of each vehicle tyre; comparator means (12) for comparing the actual tyre speed patterns to the stored tyre speed patterns; and pressure loss determining means (12) for determining that a pressure loss has occurred in a tyre if one or more of the actual tyre speed patterns do not substantially correspond to any one of the stored tyre speed patterns.

2. A tyre pressure sensing system according to claim 1, wherein the storage means (14,16) is adapted to store a pressure loss pattern for each tyre representative of tyre speed when said tyre is losing pressure, the pressure loss determining means (12) being adapted to compare the actual tyre speed patterns to the stored tyre speed pressure loss patterns; the system comprising pressure loss indicating means (18) actuable when an actual tyre speed pattern substantially corresponds to a stored tyre speed pressure loss pattern.

3. A tyre pressure sensing system according to claim 2, wherein the determining means (12) is adapted to obtain an actual speed pattern for each vehicle tyre on the basis of the sensed tyre speeds and of a predetermined offset value; the pressure loss determining means (12) being adapted to adjust the predetermined offset value by an amount related to sensed tyre speed if an actual tyre speed pattern does not correspond to any stored tyre speed pressure loss pattern.

4. A method of determining pressure loss in the tyres of a vehicle, each tyre having in use a speed related to vehicle speed and to vehicle operating conditions; the method comprising the steps of storing a plurality of tyre speed patterns representative of tyre speeds occurring as a result of normal vehicle operation; obtaining a measure of the speed of each vehicle tyre; obtaining an actual tyre speed pattern from the sensed tyre speed of each vehicle tyre; comparing the actual tyre speed patterns to the stored tyre speed patterns; and determining that a pressure loss has occurred in a tyre if one or more of the actual tyre speed patterns do not substantially correspond to any one of the stored tyre speed patterns.

5. A method according to claim 4, comprising the steps of storing a tyre speed pressure loss pattern for each tyre representative of tyre speed when said tyre is losing pressure; comparing the actual tyre speed patterns to the stored tyre speed pressure loss patterns; and indicating when an actual tyre speed pattern substantially corresponds to a stored tyre speed pressure loss pattern.

6. A method according to claim 5, wherein the step of obtaining an actual tyre speed pattern obtains an actual speed pattern for each vehicle tyre on the basis of the sensed tyre speeds and of a predetermined offset value; the method comprising the step of adjusting the predetermined offset value by an amount related to sensed tyre speed if an actual tyre speed pattern does not correspond to any stored tyre speed pressure loss pattern.

FIG. 1

FIG. 2

# FIG. 3a

Flowchart:

40 — ( INTERRUPT )

42 — MEASURE SPEED OF VEHICLE WHEELS

44 — CALCULATE AVERAGE WHEEL SPEED

46 — CALCULATE [PD] AND STORE

48 — $[PS] = \sum\limits^{10} [PD]$

50 — ANY ELEMENT OF $[PS] \geq \delta$ ? — NO → B

YES ↓

52 — $[PS'] = \dfrac{[PS]}{\left|\, max \,\left|[PS]\right|\,\right|}$

54 — CALCULATE ra, rd, rl, rr

56 — CALCULATE [Δ1]

58 — ANY ELEMENT OF $[\Delta 1] \geq 0$ ? — YES → B

NO ↓

59 — STORE [PS]

60 — $[PM] = \sum\limits^{10} [PS]$

↓

A          B

Ⓐ             Ⓑ

STORE [PM] — 61

$$[PM'] = \frac{[PM]}{|\max |[PM]||}$$ — 62

CALCULATE rllf, rirf, rllb, rlrb — 64

CALCULATE [Δ2] — 66

68 — ANY ELEMENT OF [Δ2] ≥ 0 ?

YES — INDICATE LOW PRESSURE — 70

NO

72 — TIRE RESET DETECTED ?

YES

74 — [VO] = 0

NO

76 — UPDATE [VO]

78 — RETURN

FIG. 3b

ACCELERATION

FIG. 4a

$$[PA] = \begin{bmatrix} PA_1 \\ PA_2 \\ \vdots \\ PA_6 \end{bmatrix} = \begin{bmatrix} 0 \\ 0 \\ -1 \\ -1 \\ -1 \\ -1 \end{bmatrix}$$

FIG. 4b

DECELERATION

FIG. 4c

$$[PD] = \begin{bmatrix} PD_1 \\ PD_2 \\ \vdots \\ PD_6 \end{bmatrix} = \begin{bmatrix} 0 \\ 0 \\ +1 \\ +1 \\ +1 \\ +1 \end{bmatrix}$$

FIG. 4d

LEFT TURN

FIG. 4e

$$[PL] = \begin{bmatrix} PL_1 \\ PL_2 \\ \vdots \\ PL_6 \end{bmatrix} = \begin{bmatrix} -1 \\ -1 \\ 0 \\ 0 \\ -1 \\ +1 \end{bmatrix}$$

FIG. 4f

12

RIGHT TURN

FIG. 4g

$$[PR] = \begin{bmatrix} PR_1 \\ PR_2 \\ \bullet \\ \bullet \\ PR_6 \end{bmatrix} = \begin{bmatrix} +1 \\ +1 \\ 0 \\ 0 \\ +1 \\ -1 \end{bmatrix}$$

FIG. 4h

LEFT FRONT

FIG. 5a

$$[PLLF] = \begin{bmatrix} PLLF_1 \\ PLLF_2 \\ \bullet \\ \bullet \\ PLLF_6 \end{bmatrix} = \begin{bmatrix} +1 \\ 0 \\ +1 \\ 0 \\ +1 \\ 0 \end{bmatrix}$$

FIG. 5b

RIGHT FRONT

FIG. 5c

$$[PLRF] = \begin{bmatrix} PLRF_1 \\ PLRF_2 \\ \bullet \\ \bullet \\ PLRF_6 \end{bmatrix} = \begin{bmatrix} -1 \\ 0 \\ 0 \\ +1 \\ 0 \\ +1 \end{bmatrix}$$

FIG. 5d

LEFT BACK

FIG. 5e

$$[PLLB] = \begin{bmatrix} PLLB_1 \\ PLLB_2 \\ \vdots \\ PLLB_6 \end{bmatrix} = \begin{bmatrix} 0 \\ +1 \\ -1 \\ 0 \\ 0 \\ -1 \end{bmatrix}$$

FIG. 5f

RIGHT BACK

FIG. 5g

$$[PLRB] = \begin{bmatrix} PLRB_1 \\ PLRB_2 \\ \vdots \\ PLRB_6 \end{bmatrix} = \begin{bmatrix} 0 \\ -1 \\ 0 \\ -1 \\ -1 \\ 0 \end{bmatrix}$$

FIG. 5h

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-3 236 520 (BOSCH)<br>* claim 8 *<br><br>--- | 1 | B60C23/00 |
| A | EP-A-0 466 535 (RENAULT)<br>* claim 9 *<br><br>----- | | |
| | | | TECHNICAL FIELDS SEARCHED (Int. Cl.5 ) |
| | | | B60C |

The present search report has been drawn up for all claims

| Place of search | Date of completion of the search | Examiner |
|---|---|---|
| THE HAGUE | 16 APRIL 1993 | HAGEMAN M. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)